# EUROPÄISCHE PATENTANMELDUNG

(11) **EP 4 657 251 A1**
(43) Veröffentlichungstag der Anmeldung: **03.12.2025**
(21) Anmeldenummer: 24179220.9
(22) Anmeldetag: 31.05.2024
(51) Int. Cl.: G06F 9/455, G06F 9/46, G06F 21/12

(54) **COMPUTERIMPLEMENTIERTES VERFAHREN UND VORRICHTUNG ZUR INBETRIEBNAHME EINER CONTAINER-INSTANZ AUF EINEM GASTRECHNER**

(71) Anmelder: Siemens Aktiengesellschaft, 80333 München (DE)
(72) Erfinder: Knierim, Christian, 81373 München (DE)
(74) Vertreter: Siemens Patent Attorneys

(57) **Zusammenfassung**

Die Erfindung betrifft ein computerimplementiertes Verfahren zur Inbetriebnahme einer Container-Instanz auf einem Gastrechner (H), wobei eine auf dem Gastrechner bereitgestellte Laufzeitumgebung (L) zur Ausführung zumindest einer in der Container-Instanz betriebenen Anwendung eingerichtet wird und/oder ist,
gekennzeichnet durch folgende Verfahrensschritte:
a) Vor der Inbetriebnahme der Container-Instanz, genannt Workload-Container-Instanz (WC), bereitstellen und starten einer die Workload-Container-Instanz initialisierenden Container-Instanz, genannt Init-Container-Instanz (IC);
b) Erzeugen, durch die Init-Container-Instanz, eines Namensraums (C) mit für die Workload-Container-Instanz eingerichteten Privilegien, der der Workload-Container-Instanz zuzuweisen ist, wobei der zuzuweisende Namensraum aus zumindest einem Teil des auf dem Gastrechner bestehenden Namensraums erzeugt wird und als Referenz an die Laufzeitumgebung zurückgegeben wird; und
c) Zuweisen des erzeugten Namensraums an die Workload-Container-Instanz und Starten der Workload-Container-Instanz durch die Laufzeitumgebung.

## Beschreibung

Die Erfindung betrifft ein computerimplementiertes Verfahren und Vorrichtung zur Inbetriebnahme einer Container-Instanz auf einem Gastrechner, wobei eine auf dem Gastrechner bereitgestellte Laufzeitumgebung zur Ausführung zumindest einer in der Container-Instanz betriebenen Anwendung eingerichtet wird und/oder ist, sowie ein zugehöriges Computerprogrammprodukt.

Da industrielle Systeme (Steuergeräte, Industrie PCs, IoT- und Edge-Geräte, Cloud-Server) oft über einen langen Zeitraum im Feld verwendet werden, sind sie sich ständig ändernden Voraussetzungen und einem dynamischen Umfeld ausgesetzt. Um mit diesen Umständen umzugehen, werden vor allem neue Geräte so entwickelt, dass sie über die Nutzungszeit flexibel angepasst werden können, z.B. durch die Unterstützung von nachladbaren Applikationen mittels Container-Technologien.

Container-Technologien (z. B. Docker, runC, podman, ContainerD oder LXC) werden häufig im Zusammenhang mit dynamisch nachladbaren Applikationen in Linux-basierten Systemen verwendet. Die Laufzeitumgebung für Container-Applikationen (Container-Apps) wird dabei durch die Virtualisierung von globalen Ressourcen (z.B. Basis-Filesystem, Netzwerkinterfaces des Gerätes) und unter zu Hilfenahme vom Betriebssystemkern bereitgestellten Isolationsmechanismen erzeugt. Mehrere Laufzeitumgebungen können durch zentrale Management-Systeme wie Kubernetes verwaltet werden.

Container gewährleisten die Trennung und Verwaltung der auf einem Rechner genutzten Ressourcen. Um einen Container auf einem Gastrechner, auch Host bzw. Hostsystem/-rechner genannt, starten zu können, wird ein Containerabbild (Containerimage) benötigt, welches neben einem Anwendungsprogramm, auch Applikationssoftware genannt, die für das Anwendungsprogramm erforderlichen Binärdateien und Bibliotheken enthält.

Das (Container-)Image selbst kann aus mehreren aufeinander aufbauenden Schichten (Layern) bestehen, die geschützt sind (kryptographisch, speichergeschützt, etc.) und daher nicht verändert werden können (z.B. OCI-Image). Mit Hilfe von Container Signaturverfahren wie Notary oder cosign können Container-Images geschützt werden. Die Layer können dabei zusammen das Dateisystem einer Container-Instanz bilden. Ein Image ist normalerweise portabel, kann in Repositories (auch Container-Registry genannt) gespeichert und mit anderen Nutzern geteilt werden. Aus einem Image können mehrere Container-Instanzen erzeugt werden, d.h. eine aktive "Instanz" eines Container-Images wird also gerade ausgeführt, d.h. eine bestimmte Applikation wird innerhalb einer Container-Instanz betrieben.

Unter Laufzeitumgebung kann beispielsweise ein Gerät oder eine Vorrichtung verstanden werden, die derart eingerichtet sind, einen Programmcode auszuführen. Hierzu kann das Gerät oder die Vorrichtung beispielsweise eine Prozessoreinheit (CPU) aufweisen, die den Programmcode ausführt. Die Laufzeitumgebung kann selbst in Software oder in Hardware realisiert sein. Die Laufzeitumgebung ermöglicht dabei die Ausführung von Programmcode. Eine Laufzeitumgebung kann durch mindestens einen umgebungsspezifischen Parameter beschrieben werden, z.B. der Maschinentyp / CPU-Typ, Version des Host-Betriebssystemkernels, Linux-Distribution, installierte Pakete, andere laufende Prozesse, etc.

Unter Programmcode kann im vorliegenden Zusammenhang eine Applikation (App) und/oder ein Programm und/oder Programmbefehle und/oder ein Container-Image verstanden werden. Linux Container, z.B. unter Verwendung von Docker oder runC, ermöglichen beispielsweise die Ausführung eines Container-Speicherabbilds (Container-Image) und der darin enthaltenen Software-Applikation in einer isolierten Ausführungsumgebung, die auf eine Laufzeitumgebung der oben beschriebenen Art aufgesetzt werden kann. Container-Instanzen können beispielsweise verwendet werden, um flexibel unterschiedliche (App-)Funktionalitäten auf einem Steuergerät bzw. Feldgerät auszuführen. Eine Container-Instanz bzw. das Container-Image werden daher auch als Container-App bezeichnet. Der Begriff Container und Container-Instanz werden im folgenden Kontext synonym verwendet.

Möchte man eine Container-Instanz starten bzw. in Betrieb nehmen, sollte überprüft werden, dass die für eine Container-Instanz gewünschten Ausführungsbeschränkung, auch Restriktionen (z.B. Zugriffsberechtigungen, Speicherlimits, Lizenzschlüssel...) genannt, der Ausführungsumgebungen auch tatsächlich umgesetzt sind. Die Ausführungsbeschränkungen bzw. Berechtigungen können durch eine Instanziierungsinformation (z.B. durch ein Kubernetes-Manifest oder eine Docker-Compose-Datei) zugewiesen werden. Des Weiteren ist nicht sichergestellt, dass im loT-Umfeld (loT = Internet of Things) eine Container-Instanz auf dem dafür vorgesehenen Endgerät(-typ) läuft. Dies führt dazu, dass wenn eine Container-Instanz gestartet wird, das Risiko besteht, dass eine Container-Software der Ausführungsumgebung zu viele Rechte bzw. zu wenige Ausführungsbeschränkungen, auch Restriktionen (z.B. Zugriffsberechtigungen, Speicherlimits, Lizenzschlüssel...) genannt, zuweist.

Bei Virtualisierungsmethoden wie Containern ist besonders kritisch, dass sich unterschiedliche, isoliert ausgeführte Container-Instanzen den gleichen Betriebssystem-Kernel teilen. Für die Verwendung in einem sicherheitskritischen Umfeld besteht daher Bedarf ein verbessertes Verfahren zur Privilegienzuweisung einer laufenden Instanz, insbesondere beim Starten einer Container-Instanz.

Insbesondere bei einem industriellen Edge-Gerät/-System ist eines der Ziele die Bereitstellung von containerisierten Applikationen (so genannten Industrial Edge Apps), welche meist durch eine Instanziierungsinformation wie z.B. Docker-Compose und Kubernetes Manifest initialisiert werden. Hierbei kann zwar Einfluss auf die Startreihenfolge einzelner Instanzen (z.B. durch die Verwendung von "depends on" bei Docker-Compose genommen werden und auch die Wahl der Betriebssystem-Namespaces ist flexibel, jedoch ist für die Workload-Container-Applikation nicht direkt erkennbar, ob der den Workload-Container initialisierender Init-Container abgeschlossen ist, wenn der eigentliche Workload-Container gestartet wurde. Init-Container sind in der Regel Container-Instanzen, welche ggf. mit höheren Berechtigungen (z.B. Benutzerberechtigungen, Prozessprivilegien) temporär ausgeführt werden, um innerhalb einer anderen Instanz oder auf dem darunterliegenden System Initialisierungsoperationen für die andere Instanz auszuführen (siehe z.B. https://kubernetes.io/docs/concepts/workloads/pods/init-containers/).

Es besteht außerdem die Möglichkeit, dass der Init-Container Zugriff auf das Docker-Socket erhält und hierdurch dann den zu startenden Workload-Container aus sich selbst heraus startet. Dieses Verhalten würde jedoch das Docker-Compose-Format brechen und privilegierten Zugriff auf das Docker-Socket zum Start der Workload-Instanz erfordern. Innerhalb des Init-Containers und innerhalb der Docker-Compose-Datei gibt es Start-/Initialisierungsinformationen für die Workload-Container-Instanz. Es sind normalerweise nicht sämtliche Ressourcen einer containerisierten Gesamtapplikation in der Docker-Compose-Datei spezifiziert. Deshalb sollte ein solcher Zugriff für Standard-Applikationen eingeschränkt werden. einschränken. Nicht zugelassen werden, da hierüber ein Angreifer potenziell vollen Zugriff auf die Containerlaufzeitumgebung (Docker) erhält.

Lösungen wie Kubernetes bieten als Konzept so-genannte dedizierte Init-Container (siehe auch https://kubernetes.io/docs/concepts/workloads/pods/init-containers/). Bei solchen Init-Containern ist jedoch das Konzept, dass diese im gleichen Pod (Gruppe: Pod = kleinste Einheit, die in Kubernetes erstellt und verwaltet werden kann) und somit in den gleichen Betriebssystem-Namensraum (Namespace) wie der eigentliche Workload-Container, in welchem die Applikation betrieben wird, ausgeführt werden.

Mit Hilfe von OCI- oder Posix Hooks (siehe https://github.com/opencontainers/runtimespec/blob/main/config.md#posix-platform-hooks) können innerhalb der Laufzeit privilegierte Operationen außerhalb einer Container-instanz in dessen Startphase ausgeführt werden. Hiermit können dann Initialsierungen innerhalb des Workload- bzw. Anwendungscontainers durchgeführt werden. Hierfür müsste dann aber am Anwendungsbeispiel die sogenannte Hook-Engine für die Container-Laufzeitumgebung aktiviert werden. Einer Anwendung müsste erlaubt werden, solche anwendungsspezifischen Hook-Programme auf dem Gastrechner zu hinterlegen. Dies stellt ein potenzielles Sicherheits- und Betriebsrisiko dar, da dies unerwünschte Auswirkungen auf die Container-Laufzeitumgebung haben kann.

Für solche zur Verfügung gestellten containerisierten Applikationen sollen daher Sicherheitsgarantien derart gestaltet sind, dass z.B. erhöhte Berechtigungen bzw. Privilegien ausschließlich während der Initialisierungsphase einer Applikation (z.B. Spiegeln eines Netzwerk-Interfaces) angefordert werden, aber die eigentliche Applikationsverarbeitung (wie z.B. das Durchführen von Netzwerkanalysen) mit niedrigeren Berechtigungen bzw. Privilegien durchgeführt wird.

Privilegien können in diesem Kontext Ausführungsberechtigungen bzw. Ressourcenzugriffe sein.

Der Erfindung liegt daher die Aufgabe zugrunde, ein Verfahren und eine Vorrichtung derart auszugestalten, dass eine gegenüber dem Stand der Technik noch sicherere Inbetriebnahme einer Container-Instanz auf einem Gastrechner gewährleistet wird.

Diese Aufgabe wird durch die Merkmale gemäß den unabhängigen Patentansprüchen gelöst. Vorteilhafte Ausführungsformen der vorliegenden Erfindung sind in den abhängigen Ansprüchen beschrieben.

Die Erfindung betrifft ein computer-implementiertes Verfahren zur Inbetriebnahme einer Container-Instanz auf einem Gastrechner, wobei eine auf dem Gastrechner bereitgestellte (Container-)Laufzeitumgebung zur Ausführung zumindest einer in der Container-Instanz betriebenen Anwendung eingerichtet wird und/oder ist, gekennzeichnet durch folgende Verfahrensschritte:
a) Vor der Inbetriebnahme der Container-Instanz, genannt Workload-Container-Instanz, bereitstellen und starten einer die Workload-Container-Instanz initialisierenden Container-Instanz, genannt Init-Container-Instanz;
b) Erzeugen, durch die Init-Container-Instanz, eines Namensraums mit für die Workload-Container-Instanz eingerichteten Privilegien, der der Workload-Container-Instanz zuzuweisen ist, wobei der zuzuweisende Namensraum aus zumindest einem Teil des auf dem Gastrechner bestehenden Namensraums erzeugt wird und als Referenz an die Laufzeitumgebung zurück-/übergegeben wird; und
c) Zuweisen des erzeugten Namensraums an die Workload-Container-Instanz und Starten der Workload-Container-Instanz durch die Laufzeitumgebung.

Eine Laufzeitumgebung kann auf einem Gastrechner laufen und nutzt somit einen oder mehrere Prozessoren des Gastrechners.

Die Schritte können auch als Phasen bzw. Stufen für das Einrichten der erforderlichen Ausführungsbeschränkung oder mehreren Ausführungsbeschränkungen bzw. Privilegien verstanden werden.

Der zuzuweisende Namensraum kann ganz oder teilweise aus dem auf dem Gastrechner bestehenden Namensraums und/oder aus Ressourcen erzeugt werden. Der bestehende Namensraum kann dabei hierarchisch oder nicht-hierarchisch aufgebaut sein. Der zuzuweisende Namensraum muss aber die Hierarchie des bestehenden Namensraums nicht 1:1 übernehmen.

Durch die Init-Container-Instanz werden weitere Initialisierungsoperationen, die für den Namenraums für die Workload-Container-Instanz zu deren Betrieb benötigt werden, auf dem Namensraum der Init-Container-Instanz ausgeführt.

Nach dem eingangs beschriebenen Stand der Technik werden Initialisierungsoperationen im Workload-Container-Namensraum ausgeführt. Es ist demnach denkbar, dass quasi zwei Init-Container-Instanz, eine "Standard"-Init-Container-Instanz und die erfindungsgemäße Init-Container-Instanz, zur Verfügung gestellt werden.

Solche Initialisierungsoperationen können bei Netzwerknamensräumen Paketweiterleitungsregeln, Paketumleitungsregelen, bei Mount-Namespaces das Zuweisen spezieller Dateisystempfade, das Einschränkung der Rollen (Lesen/Schreiben) und bei Prozessnamespaces das Anlegen von Filesockets oder einer Pipe sein.

Die Init-Container-Instanz kann nach der Namensraumrückgabe als Referenz und/oder der weiteren Initialisierungsoperationen beendet werden.

Somit wird die erfindungsgemäße Init-Container-Instanz zur Privilegienreduktion für eine Workload-Container-Instanz erst in einem anderen Namensraum gestartet, in diesem dann entsprechende für die Workload-Container-Instanz erforderlichen Arbeiten durchführt und aus diesem Namensraum heraus einen weiteren (Unter-)Namensraum erzeugt, welcher von der Workload-Container-Instanz verwendet wird.

Container-Instanzen werden normalerweise in mehreren Schritten gestartet bzw. in Betrieb genommen. Eine Container-Instanzen ist über einen oder mehrere entsprechende(n) Container-Instanz-Prozess(e) sichtbar. Ausführungsbeschränkungen der Laufzeitumgebung (z.B. Zuweisen von SELinux-Kontexten, Verwerfen von Fähigkeiten (Capabilities), Etablieren von Namespaces sind folglich in den/in die Container-Instanz-Prozess(e) einzurichten oder beim Start zu übergeben. Konformitätsüberprüfungen, d.h. das Überprüfen anhand von Zulässigkeitskriterien, für die Laufzeitumgebung werden normalerweise auch beim Start dieses/r Prozesse(s) durchgeführt.

Die Erfindung ermöglicht somit, dass ein Entwickler einer Applikation, dedizierte, privilegierte Initialisierungsoperationen mit Hilfe eines Init-Containers auf einem Gastrechner mit Host-Berechtigungen durchführen kann und dass diese Operationen Auswirkungen auf die nichtprivilegierten Container-Instanzen und deren Betriebssystem-Namespaces haben.

Erfindungsgemäß kann die Initialisierung des Namespaces eines Workload-Containers kann an die Init-Container-Instanz ausgelagert werden und an die Laufzeitumgebung zurückgegeben werden. Vorteilhaft an dem erfindungsgemäßen Verfahren ist, dass die Initialisierungstätigkeit mit der Deployment-Konfiguration gebündelt werden kann. Zur Durchführung von Initialisierungsoperationen auf dem Host-System sind keine OCI-Hooks erforderlich. Die Init-Container-Instanz benötigt auch keinen Zugriff auf das Docker-Socket zum Erzeugen einer Container-Instanz. Der Init-Container kann bestimmen, wie die Terminierung der Workload-Container-Instanz durchgeführt werden soll (s.u.). Die Init-Container-Instanz kann während dessen Laufzeit in beiden Namespaces, d.h. von der Init-Container-Instanz erzeugten und in dem vom Betriebssystem zur Verfügung gestellten Namensraum, entsprechende Operationen ausführen.

Die Laufzeitumgebung kann zur Ausführung nur bestimmte, vertrauenswürdige Init-Container-Instanzen zulassen.

Durch das erfindungsgemäße Verfahren können Workload-Container-Instanzen niedriger privilegiert werden.

Vor dem Starten der Init-Container-Instanz eine Integritäts- und/oder Authentizitätsüberprüfung der Init-Container-Instanz durchgeführt wird.

Vor dem Starten der Workload-Container-Instanz kann eine Integritäts- und/oder Authentizitätsüberprüfung der Workload-Container-Instanz durchgeführt werden.

Für die Verwendung und/oder Löschen des erzeugten und zugewiesenen Namensraums nach Ausführung der Workload-Container-Instanz kann eine Richtlinie (Policy) durch die Laufzeitumgebung beachtet werden.

Die Verwendung und/oder das Löschen des erzeugten und zugewiesenen Namensraums kann nach Ausführung der Workload-Container-Instanz durch eine Terminierungs-Container-Instanz überwacht und durchgeführt werden. Die Termininierungs-Container-Instanz kann analog zur Init-Container-Instanz ausgebildet sein mit dem Unterschied, dass keine Referenz auf den erzeugten Namensraum, der ggf. wieder gelöscht werden soll, an die Laufzeitumgebung zurückgegeben wird.

Analog zum obigen Verfahren ist ein weiterer Aspekt der Erfindung eine Vorrichtung zur Inbetriebnahme einer Container-Instanz, wobei eine auf der Vorrichtung bereitgestellte (Container-)Laufzeitumgebung zur Ausführung zumindest einer in der Container-Instanz betriebenen Anwendung eingerichtet ist, wobei die Vorrichtung dazu ausgelegt ist, folgendes auszuführen:
a) Vor der Inbetriebnahme der Container-Instanz, genannt Workload-Container-Instanz, bereitstellen und starten einer die Workload-Container-Instanz initialisierenden Container-Instanz, genannt Init-Container-Instanz;
b) Erzeugen, durch die Init-Container-Instanz, eines Namensraums mit für die Workload-Container-Instanz eingerichteten Privilegien, der der Workload-Container-Instanz zuzuweisen ist, wobei der zuzuweisende Namensraum aus zumindest einem Teil des auf dem Gastrechner bestehenden Namensraums erzeugt wird und als Referenz an die Laufzeitumgebung zurück-/übergegeben wird; und
c) Zuweisen des erzeugten Namensraums an die Workload-Container-Instanz und Starten der Workload-Container-Instanz durch die Laufzeitumgebung.

Die Vorrichtung kann zumindest einen intern integrierten flüchtigen oder permanenten oder einen von extern angebundenen Speicher aufweisen.

Des Weiteren wird ein Computerprogrammprodukt umfassend ein nichtflüchtiges Speichermedium, auf dem ein ladbarer und ausführbarer Programmcode gespeichert ist, welches das Verfahren nach einem der oben genannten Ausführungsformen in einer Prozessoreinheit insbesondere einer Vorrichtung nach einer der vorhergehend beschriebenen Ausführungsformen ausführt.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die Ausführungsumgebung erstellt werden kann.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es die Ausführungsumgebung erstellt werden kann.

Die Vorrichtung, die Anordnungen, Einrichtungen, Einheiten bzw. Geräte, Module und Computerprogramm(produkte) können entsprechend der Weiterbildungen/Ausführungsformen des vorgenannten Verfahrens und deren Weiterbildungen/Ausführungsformen und umgekehrt ausgebildet sein.

Eine Ausführungsform der Erfindung sieht vor, dass eine Einheit bzw. Komponente, insbesondere eine Kommunikationseinheit bzw. Netzwerkkomponente, als eine HardwareKomponente ausgebildet ist. Eine Einheit bzw. Komponente kann einen Prozessor umfassen. Subeinheiten einer größeren Einheit bzw. Hardwarekomponente können in Software, Firmware bzw. wiederum in Hardware implementiert sein.

Bei einem Prozessor bzw. Prozessoreinheit kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit) oder um ein Multi-Chip-Modul handeln, insbesondere einen FPGA (engl. Field Programmable Gate Array) oder einen ASIC (anwendungsspezifische integrierte Schaltung, engl. Application-Specific Integrated Circuit), ein SoC (System on Chip) einen Grafikprozessor GPU (Graphics Processing Unit), einen Prozessor zur Auswertung eines neuronalen Netzes wie beispielsweise eine TPU (Tensor Processing Unit) oder einen DSP (Digitaler Signalprozessor, engl. Digital Signal Processor) handeln. Der Prozessor kann eine oder mehrere Rechenkerne (multi-core) aufweisen. Auch kann unter einem Prozessor ein virtualisierter Prozessor oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens oder anderer Aspekte und Teilaspekte der Erfindung implementiert. Der Prozessor kann einen Tamper-Schutz zum Schutz vor physikalischen Manipulationen aufweisen, z.B. Tamper-Sensoren zur Detektion physikalischer Angriffe.

### Ausführungsbeispiele der Erfindung

Ausführungsbeispiele des erfindungsgemäßen Verfahrens und der Übertragungsvorrichtung sind in den Zeichnungen beispielhaft dargestellt und werden anhand der nachfolgenden Beschreibung näher erläutert. Es zeigt:
Die Figur 1 eine beispielhafte Anordnung, bei der das erfindungsgemäße Verfahren angewandt werden kann, und
die Figur 2 eine beispielhafte Ablaufbeschreibung zur Inbetriebnahme eines Workload-Container-Instanz.

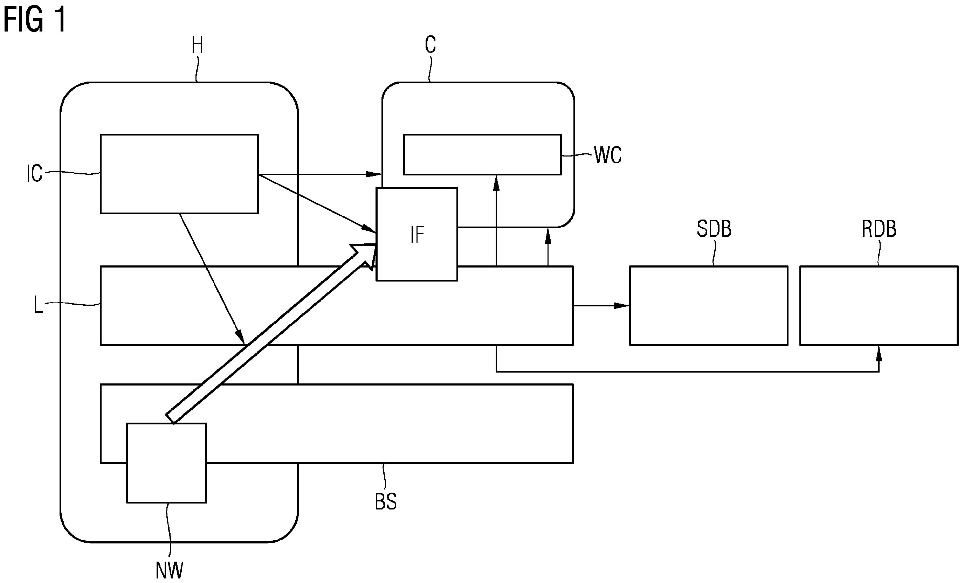

Die Figur 1 zeigt ein Anwendungsumfeld, in dem ein Gastrechner H mit einem Betriebssystem BS z.B. Linux, Windows, MacOS eingesetzt wird. Das Anwendungsumfeld kann eine Automatisierungsanlage sein, in der ein Gastrechner als Edge-Device eingesetzt wird. Beispiele hierfür sind hierfür eine Fertigungsstraße mit Anschluss an eine Cloud oder Rechenzentrum. Es kann dann eine orchestrierte Container-Laufzeitumgebung L z.B. Kubernetes oder auch eine nichtorchestrierte Container-Laufzeitumgebung z.B. Docker verwendet werden. Container-Apps können aber auch bei Gebäudetechnik z.B. Signale für Brandmelder, Wartungzugänge etc. bereitgestellt werden. Es sind aber auch in der Verkehrstechnik Signaltechnik und Wagenstandssensoren und Positionsdaten (z.B. GPS, Gallileo) bei Zügen denkbar. Auch ist bei bildgebenden Systemen der Medizintechnik eine Anbindung an eine Cloud für die Bilddatenanalyse, die KI-basiert sein kann, als Anwendungsumfeld möglich.

Die eingangs beschriebenen Ausführungsberechtigungen sind in allen diese Anwendungsumgebungen problematisch.

Im Ausführungsbeispiel wird vor dem Start einer Workload-Container-Instanz WC eine Init-Container-Instanz IC bereitgestellt und im Namensraum C z.B. Linux-Namespace, im Ausführungsbeispiel ein Netzwerk-Namespace, des Gastrechners bzw. Hosts H gestartet. Dieser legt innerhalb des bestehenden Host-Namespaces einen weiteren Unter-Namespace an, welcher als Referenz nach Abschluss der Initialisierungsarbeiten an die Container-Laufzeitumgebung L zurückgebeben wird. Die Containerlaufzeitumgebung L ordnet den von der Init-Container-Instanz erzeugten Namensraum der Workload-Container-Instanz WC zu.

Im Beispiel sollen Netzwerkverkehre, die eine Applikation innerhalb des Workload-Containers analysieren möchte, von einem Netzwerkgerät NW in den Container gespiegelt werden, damit ein Zugriff der Applikation auf das darunterliegende Netzwerkgerät vermieden wird (dazu wären entsprechende Host-Privilegien notwendig). Ein ähnliches Problem bestünde bei dem Spiegeln von Gerätedateien in einen Workload-Container-Mountnamespace, da die Gerätedatei als persistenter Speicher in den Container geschleift werden müsste.

Daher umfassen Initialisierungsarbeiten/-operation hierbei das Erzeugen eines Interface-Mirrors IF oder aber auch das dedizierte Weiterleiten einer Untermenge an Paketen für die innerhalb der Workload-Container-Instanz bereitgestellten Applikationen. Das Interface IF kann beispielsweise mit Hilfe innerhalb der Init-Container-Instanz bereitgestellten System-Kommandos , z.B. ip oder ifconfig, realisiert werden.

Im Vergleich zum Stand der Technik wird somit der Namespace für eine Container-Instanz nicht innerhalb der Container-Laufzeitumgebung erzeugt. Stattdessen erzeugt diesen die Init-Container-Instanz und führt für die in der Workload-Container-Instanz betriebene Applikation angepasste Operationen in der höher privilegierten Init-Container-Instanz durch.

Vorteilhaft an dem erfindungsgemäßen Verfahren ist, dass nur besonders vertrauenswürdige Hersteller eines Init-Containers bestimmte Operationen ausführen können und solche Container-Images von einem anderen Applikationsentwickler benutzt und für seine App-Entwicklung eingesetzt werden können.

Optional kann von der Container-Laufzeitumgebung L vor der Ausführung der Init-Container-Instanz IC dessen Signatur (z.B. Image-Signatur oder Signatur des gesamten Applikationspaketes) überprüft werden. Damit kann eine Integritäts- und/oder Authentizitätsüberprüfung der Init-Container-Instanz, aber auch der Workload-Container-Instanz durchgeführt werden. Hierzu kann in einer Signaturdatenbank SDB definiert werden, welche Init-Container-Instanzen erzeugt werden dürfen, in welchen Namespaces diese gestartet werden können und welche Prozess-Privilegien der Init-Container-Instanz, aber auch der Workload-Container-Instanz zuweisbar sind. Bzgl. der Zuordnung können sämtliche Kombinationen als Ausführungskriterium/-richtlinie (Policy) definiert werden. Diese können auch als regulärer Ausdruck und/oder auch in negierter Form definiert werden. Die Integration der Signaturdatenbank kann mit Hilfe einer Erweiterung der Laufzeitumgebung (z.B. analog eines Admission Controllers bei Kubernetes, siehe auch https://kubernetes.io/docs/reference/accessauthn-authz/admission-controllers/) implementiert werden.

Ist die Initialisierung durch die Init-Container-Instanz abgeschlossen, gibt dieser an die Container-Laufzeitumgebung den Namen des erzeugten Namespaces als Referenz zurück. Gleichzeitig gibt dieser noch zurück, ob bei der Beendigung des Applikationscontainers weitere Aufräumtätigkeiten erforderlich sind, ob ein bestimmtes Restart-Verhalten der Workload-Container-Instanz Auswirkungen auf den erzeugten Namespace hat und dieser neu erzeugt werden muss oder ob der erzeugte Namespace bei Beendigung der Applikation gelöscht werden muss/kann.

Die Aufräumtätigkeiten können hierbei an eine Terminierungs-Container-Instanz gekoppelt werden. Dieser kann beispielsweise aus dem gleichen Image wie die Init-Container-Instanz erzeugt werden und auch auf gleiche Weise über die oben beschriebene Signatur-Datenbank validiert werden. Der Unterschied zur Initialisierung ist hierbei jedoch, dass die Init-Container-Instanz die Parametrierung der Terminierungs-Container-Instanz als Rückgabewert liefert und sowohl der erzeugte Namespace, das Restart-Verhalten und die Initialisierungsinformation der Terminierungs-Contaienr-Instanz von der Container-Laufzeitumgebung in einem flüchtigen Speicher, vorzugsweise eine Laufzeit-Datenbank RDB, gespeichert werden. Dieser Speicher muss nicht persistiert sein, da angenommen wird, dass bei einem Neustart der Container-Laufzeitumgebung der vollständige Initialisierungsprozess einer Workload-Container-Instanz durch die Init-Container-Instanz neu durchgeführt wird.

Nachdem die durch die Init-Container-Instanz erzeugten Informationen in der Laufzeit-Datenbank gespeichert wurden, kann die Container-Laufzeitumgebung (ggf. nach erfolgter Validierung des Workload-Container-Images) die Workload-Instanz starten.

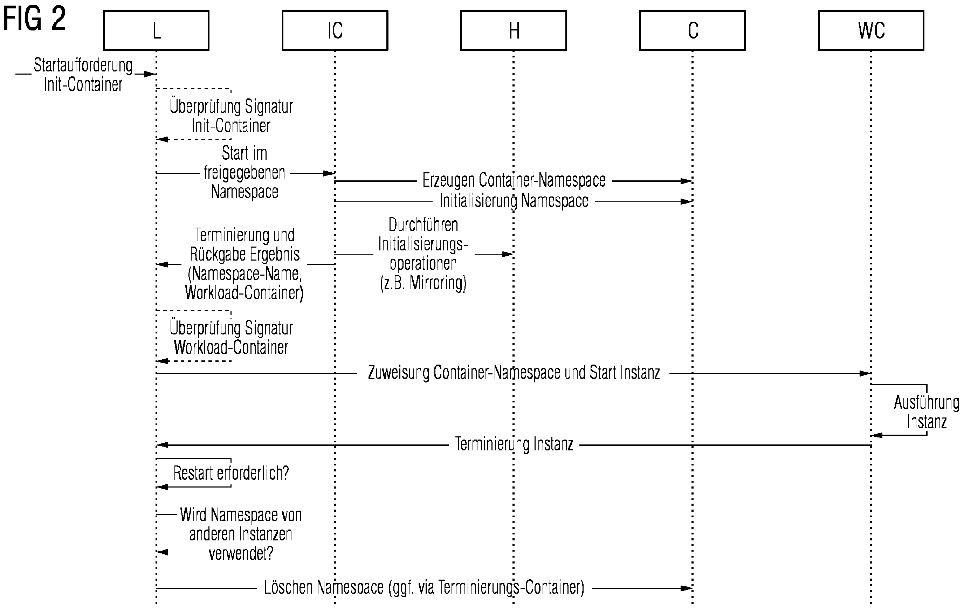

Die Figur 2 zeigt eine Ablaufbeschreibung zur Inbetriebnahme einer Workload-Container-Instanz wie sie oben schon erläutert wurde.

Wie Fehler! Verweisquelle konnte **nicht** gefunden werden. dargestellt, ist der Initialisierungsprozess abgeschlossen, sobald die Workload-Container-Instanz erzeugt wurde. Die Workload-Container-Instanz kann somit mit reduzierten Privilegien ausgeführt werden.

Wird die Workload-Container-Instanz beendet (z.B. durch einen Benutzer über eine exponierte Anwendungsschnittstelle oder durch die Container-Laufzeitumgebung), greift die Container-Laufzeitumgebung auf die Laufzeit-Datenbank, die Terminierungsrichtlinien enthalten kann, zu und ermittelt die für die Terminierung erforderlichen Schritte.

Während der Terminierung erfolgen durch die Container-Laufzeitumgebung und ggf. durch eine Termininierungs-Container-Instanz Terminierungsarbeiten (z.B. Abbau eines Netzwerk-Tunnels) und das Löschen des Workload-Instanz-Namespaces, welcher zuvor von der Init-Container-Instanz erzeugt wurde.

Auf analoge Weise wie bei der Init-Container-Instanz kann hierbei die Terminierungsaktion - sofern diese durch eine Termininierungs-Container-Instanz ausgeführt wurde - durch die Container-Laufzeitumgebung mit Hilfe von Integritäts- und Authentizitätsüberprüfungen (z.B. mit Hilfe von Signaturen) validiert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Die Übertragungsvorrichtung kann ein oder mehrere Prozessoren aufweisen. Der Begriff "Prozessor", "zentrale Signalverarbeitung", "Steuereinheit" oder "Datenauswertemittel", umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequenziellen Verarbeitung bzw. Ausführung von Instruktionen ausgelegt bzw. konfiguriert sein.

## Patentansprüche

1. Computer-implementiertes Verfahren zur Inbetriebnahme einer Container-Instanz auf einem Gastrechner (H), wobei eine auf dem Gastrechner bereitgestellte Laufzeitumgebung (L) zur Ausführung zumindest einer in der Container-Instanz betriebenen Anwendung eingerichtet wird und/oder ist,
**gekennzeichnet durch** folgende Verfahrensschritte:
a) vor der Inbetriebnahme der Container-Instanz, genannt Workload-Container-Instanz (WC), bereitstellen und starten einer die Workload-Container-Instanz initialisierenden Container-Instanz, genannt Init-Container-Instanz (IC);
b) Erzeugen, durch die Init-Container-Instanz, eines Namensraums (C) mit für die Workload-Container-Instanz eingerichteten Privilegien, der der Workload-Container-Instanz zuzuweisen ist, wobei der zuzuweisende Namensraum aus zumindest einem Teil des auf dem Gastrechner bestehenden Namensraums erzeugt wird und als Referenz an die Laufzeitumgebung zurückgegeben wird; und
c) Zuweisen des erzeugten Namensraums an die Workload-Container-Instanz und Starten der Workload-Container-Instanz durch die Laufzeitumgebung.

2. Verfahren nach dem vorhergehenden Anspruch, **dadurch gekennzeichnet, dass** weitere Initialisierungsoperationen, die für den Namenraums für die Workload-Container-Instanz zu deren Betrieb benötigt werden, durch die Init-Container-Instanz auf dem Namensraum der Init-Container-Instanz ausgeführt werden.

3. Verfahren nach einem der vorhergehenden Ansprüche, **dadurch gekennzeichnet, dass** vor dem Starten der Init-Container-Instanz eine Integritäts- und/oder Authentizitätsüberprüfung der Init-Container-Instanz durchgeführt wird.

4. Verfahren nach einem der vorhergehenden Ansprüche, **dadurch gekennzeichnet, dass** vor dem Starten der Workload-Container-Instanz eine Integritäts- und/oder Authentizitätsüberprüfung der Workload-Container-Instanz durchgeführt wird.

5. Verfahren nach einem der vorhergehenden Ansprüche, **dadurch gekennzeichnet, dass** für die Verwendung und/oder Löschen des erzeugten und zugewiesenen Namensraums nach Ausführung der Workload-Container-Instanz eine Richtlinie durch die Laufzeitumgebung beachtet wird.

6. Verfahren nach einem der vorhergehenden Ansprüche, **dadurch gekennzeichnet, dass** die Verwendung und/oder Löschen des erzeugten und zugewiesenen Namensraums nach Ausführung der Workload-Container-Instanz durch eine Terminierungs-Container-Instanz überwacht und durchgeführt wird.

7. Vorrichtung (H) zur Inbetriebnahme einer Container-Instanz, wobei eine auf der Vorrichtung bereitgestellte Laufzeitumgebung (L) zur Ausführung zumindest einer in der Container-Instanz betriebenen Anwendung eingerichtet ist, wobei die Vorrichtung dazu ausgelegt ist,
folgendes auszuführen:
a) vor der Inbetriebnahme der Container-Instanz, genannt Workload-Container-Instanz, bereitstellen und starten einer die Workload-Container-Instanz (WC) initialisierenden Container-Instanz, genannt Init-Container-Instanz (IC);
b) Erzeugen, durch die Init-Container-Instanz, eines Namensraums (C) mit für die Workload-Container-Instanz eingerichteten Privilegien, der der Workload-Container-Instanz zuzuweisen ist, wobei der zuzuweisende Namensraum aus zumindest einem Teil des auf dem Gastrechner bestehenden Namensraums erzeugt wird und als Referenz an die Laufzeitumgebung zurückgeben wird; und
c) Zuweisen des erzeugten Namensraums an die Workload-Container-Instanz und Starten der Workload-Container-Instanz durch die Laufzeitumgebung.

8. Computerprogrammprodukt umfassend ein nichtflüchtiges Speichermedium, auf dem ein ladbarer und ausführbarer Programmkode gespeichert ist, welches das Verfahren nach einem der vorhergehenden Verfahrensansprüchen in einer Prozessoreinheit einer Vorrichtung nach einem der vorhergehenden Vorrichtungsansprüche ausführt.
